# EUROPÄISCHE PATENTSCHRIFT

(11) **EP 0 824 218 B1**
(45) Veröffentlichungstag und Bekanntmachung des Hinweises auf die Patenterteilung: **23.07.2003**
(21) Anmeldenummer: 96112989.7
(22) Anmeldetag: 13.08.1996
(51) Int. Cl.: G03B 27/62

(54) **Vorrichtung zum Bearbeiten von fotographischen Filmen**
Device for processing photographic films
Dispositif pour le traitement de films photographiques

(43) Veröffentlichungstag der Anmeldung: 18.02.1998
(73) Patentinhaber: Agfa-Gevaert AG, 51373 Leverkusen (DE)
(72) Erfinder: Oberhardt, Knut, 83607 Föching (DE); Mangold, Edmund, 82441 Ohlstadt (DE); Lorenz, Bernhard, 85354 Freising (DE)

(56) Entgegenhaltungen:
- EP-A- 0 518 104
- EP-A- 0 672 938
- EP-A- 0 677 771
- EP-A- 0 724 187
- DE-A- 3 437 222

## Beschreibung

Die Erfindung geht aus von einer Vorrichtung nach dem Oberbegriff des ersten Anspruchs.

In der EP-OS 571 805 ist eine Filmpatrone gezeigt, die einen auf einer Spule aufgewickelten Film enthält, dessen Führungsabschnitt nicht aus der Patrone hervorsteht. Eine Labororganisation für Filme und Patronen dieser Art, bei der der Filmstreifen nach dem Kopieren wieder in die Patrone zurückgespult und dem Kunden so zusammen mit den Bildern ausgehändigt wird, ist in der EP-OS 664 483 beschrieben.

In der DE-OS 40 38 661 wird vorgeschlagen, den Film nach der Entwicklung wieder in die Patrone zurückzuspulen und ein Kopiergerät zu verwenden, bei dem die Patrone eingelegt wird und der entwickelte Film für den Kopiervorgang aus der Patrone ausgespult und danach wieder zurückgespult wird.

Andererseits werden nach wie vor Filme des herkömmlichen Kleinbildformats verwendet, die vor der Entwicklung der Patrone entnommen werden und danach für jeden folgenden Bearbeitungsschritt in Form eines Filmstreifens vorliegen.

Aus der EP-OS 677 771 ist nun ein Bearbeitungsgerät bekannt geworden, mit dem sowohl Filme aus der Patrone als auch Filmstreifen bearbeitet werden können. Hierzu ist eine Eingabemöglichkeit für Filmstreifen vorgesehen, welche dann zuerst durch einen Scanner und danach durch eine Belichtungsstation gefördert werden. Bei der Bearbeitung von Filmen aus Patronen muß die Patrone in eine Patronenaufnahme eingelegt werden, von der aus der Film dann durch den Scanner transportiert und hinter dem Scanner zwischengespeichert wird. Nach dem Rückspulen des Films in die Patrone wird diese aus der Patronenaufnahme herausgenommen und in eine zweite Patronenaufnahme hinter dem Scanner eingesetzt. Nun wird der Film in der Belichtungsstation kopiert, hinter der Belichtungsstation nochmals zwischengespeichert und dann in die Patrone zurückgespult. Diese Vorrichtung ist sehr aufwendig aufgebaut und dazu umständlich zu bedienen.

Es ist die Aufgabe der Erfindung, ein Gerät zum Verarbeiten von Filmstreifen und Filmen in Patronen so zu gestalten, daß das Gerät einfach zu handhaben ist und daß eine vollautomatische Bearbeitung auch mit einem einfachen, kostengünstig herzustellenden Aufbau ermöglicht wird.

Gelöst wird die Aufgabe durch eine Vorrichtung mit den Merkmalen von Anspruch 1. Insbesondere bei einem sogenannten Minilab wird die universelle Einsetzbarkeit für unterschiedliche Filmsysteme besonders wichtig, weil diese Geräte oft in sehr beengten Räumlichkeiten untergebracht sind und mehrere Geräte gleichzeitig nicht aufstellbar wären. Weiterhin hat man es in diesem Bereich oftmals mit ungelernten oder zumindest nur kurz eingewiesenen Arbeitskräften zu tun, so daß die Geräte so konzipiert werden müssen, daß Bedienungsfehler vermieden werden. Das ist dadurch gewährleistet, daß sowohl die Filmstreifen als auch die Patronen nur einmal eingegeben werden müssen und die weitere Bearbeitung vollautomatisiert ablaufen kann, ohne daß die Patrone nach einem ersten Bearbeitungsschritt manuell umgesetzt werden muß.

Um sicherzustellen, daß der Film in den Bearbeitungseinheiten bis zum letzten Bild bearbeitet werden kann, ohne daß das Filmende von der Spule abgetrennt werden muß, darf ein Höchstabstand zwischen der Patrone und den Bearbeitungseinheiten nicht überschritten werden. Die ausgezogene Länge des Films sollte folglich bis zu der Bearbeitungseinheit, die am weitesten von der Patroneneingabestation entfernt ist, nie mehr als 119 mm betragen.

In einem Ausführungsbeispiel sind die beiden Bearbeitungseinheiten als Prescan- und als Scaneinrichtung ausgeführt. Diese Ausführung kann insbesondere in einem digitalen Minilab zur Anwendung kommen, in dem die Bilder eines Films elektronisch erfaßt und dann über einen digitalen Belichter, wie beispielsweise einen CRT- oder einen Laserbelichter, auf Papier abgebildet werden. Bei der Erfassung der Bilder ist es notwendig, in einem Prescanner zuerst den Dichteumfang zu bestimmen, um dann den Arbeitsbereich des eigentlichen Scanners optimal einstellen zu können.

Bei einem herkömmlichen Minilab sind in der gemeinsamen Bearbeitungsstation eine Filmmeßeinrichtung und eine Kopiereinrichtung vorgesehen. Die in der Filmmeßeinrichtung ermittelten Werte werden zur Berechnung der Belichtungswerte beim Kopieren der Einzelbilder verwendet.

Bei beiden Ausführungsarten können die zwei Bearbeitungsschritte auch in zwei Durchläufen des Films durch die gemeinsame Bearbeitungsstation durchgeführt werden. Bei dem digitalen Minilab wird der Filmstreifen oder der Film aus der Patrone bei einem ersten Durchlauf durch die Bearbeitungsstation in der Prescan-Einrichtung abgetastet, während bei einem weiteren Durchlauf dann die Mainscan-Einrichtung aktiv ist. Bei einem herkömmlichen Minilab werden bei dem ersten Durchlauf in der Filmmeßeinrichtung die Bilddaten für den gesamten Film erfaßt und gesammelt und im zweiten Durchlauf die Einzelbilder in der Kopierstation auf Papier aufbelichtet.

Diese zwei Durchläufe können in einer Richtung erfolgen; aus Zeitgründen ist es jedoch sinnvoll, den zweiten Bearbeitungsschritt im Rücklauf vorzunehmen. Ein Filmstreifen kann folglich nach dem Bearbeiten wieder aus der Eingabestation entnommen werden. Auch dieses Merkmal beugt Bedienungsfehlern vor, da bei der Bearbeitung eines Films aus der Patrone auf jeden Fall die gleiche Handlungsweise notwendig ist. Hier muß der Film immer in die Patrone rückgespult werden, d. h. die Patrone muß aus derselben Aufnahme nach dem Bearbeiten herausgenommen werden, in die sie vor dem Bearbeiten eingelegt wurde.

Die erfindungsgemäße Vorrichtung weist eine Eingabestation für Patronen, wie sie u. a. in der DE-OS 40 38 661 beschrieben sind, und eine weitere Eingabestation für herkömmliche Filmstreifen im Kleinbildformat auf. Die Patronenaufnahme ist dabei in vorteilhafter Weise so ausgebildet, daß die Patrone nur in einer einzigen Orientierung eingegeben werden kann. Hierdurch werden von vornherein Fehleingaben vermieden. Ist dies insbesondere bei der Nachrüstung von bestehenden Geräten nicht möglich, so werden Mittel vorgesehen, die die Orientierung der Patrone in der Patronenaufnahme detektieren und bei einer evtl. Falscheingabe eine entsprechende Warnung oder ein Alarmsignal erzeugen. Die gleiche Maßnahme wird bei der Eingabestation für Filmstreifen getroffen, da auch hier eine falsche Eingabe möglich ist. Hier kommt es insbesondere darauf an, daß die Emulsionsschicht des Filmstreifens die richtige Orientierung aufweist, da die erstellten Papierabzüge ansonsten seitenverkehrt sind. Die Ermittlung der Orientierung der eingegebenen Filmstreifen kann beispielsweise anhand des DX-Codes erfolgen, wie es in der DE-OS 41 14 343 beschrieben ist.

Ist das Minilab mit einer Filmentwicklung so verbunden, daß die Filmstreifen von der Filmentwicklung direkt in den Printteil des Minilabs überführt werden, so ist es vorteilhaft, eine dritte Eingabestation für diese vom Entwicklungsgerät kommenden Filmstreifen vorzusehen.

Die Eingabestationen können auf einem motorisch betriebenen, vertikal verstellbaren Schlitten angeordnet sein. Ist das Minilab so ausgerüstet, daß die eigentliche Filmmeß- und/oder Kopierstation an verschiedene Formate automatisch angepaßt werden kann, so kann die Gesamtsteuerung des Gerätes über die Eingabe der Patronen oder Filmstreifen erfolgen. Wird beispielsweise eine Patrone in die dafür vorgesehene Eingabestation eingegeben, so wird der Schlitten so verfahren, daß die Führungs- und Transporteinrichtung dieser Eingabestation den Film direkt an die Führungs- und Transporteinrichtung durch die Bearbeitungsstation übergeben kann. Gleichzeitig kann die Bearbeitungsstation an das Format des Films in der Patrone angepaßt werden. Dies kann entweder durch ein Verfahren von Elementen oder aber durch den automatischen Wechsel der kompletten Bühne passieren.

Eine einfachere, aber ebenso wirkungsvolle Möglichkeit ist es, die einzelnen Eingabestationen ortsfest anzubringen. Die Führungs- und Transporteinrichtungen der Eingabestationen sind dann so angeordnet, daß sie in die Führungs- und Transporteinrichtung durch die Bearbeitungsstation einmünden. Dies kann normalerweise so erfolgen, daß in der Überführstation keinerlei motorische Verstellung notwendig ist.

Weitere Einzelheiten und Vorteile der Erfindung ergeben sich aus den Unteransprüchen im Zusammenhang mit der Beschreibung von Ausführungsbeispielen, die anhand der Zeichnung eingehend erläutert werden.

Es zeigen:
- Fig. 1: eine erfindungsgemäße Vorrichtung mit zwei Eingabestationen, einer Filmmeßeinrichtung und einer Kopiereinrichtung,
- Fig. 2: eine erfindungsgemäße Vorrichtung mit drei Eingabestationen, einer Prescan- und einer Mainscaneinrichtung und
- Fig. 3: eine Überführstation mit einer Eingabestation für Patronen und zwei Eingabestationen für Filmstreifen.

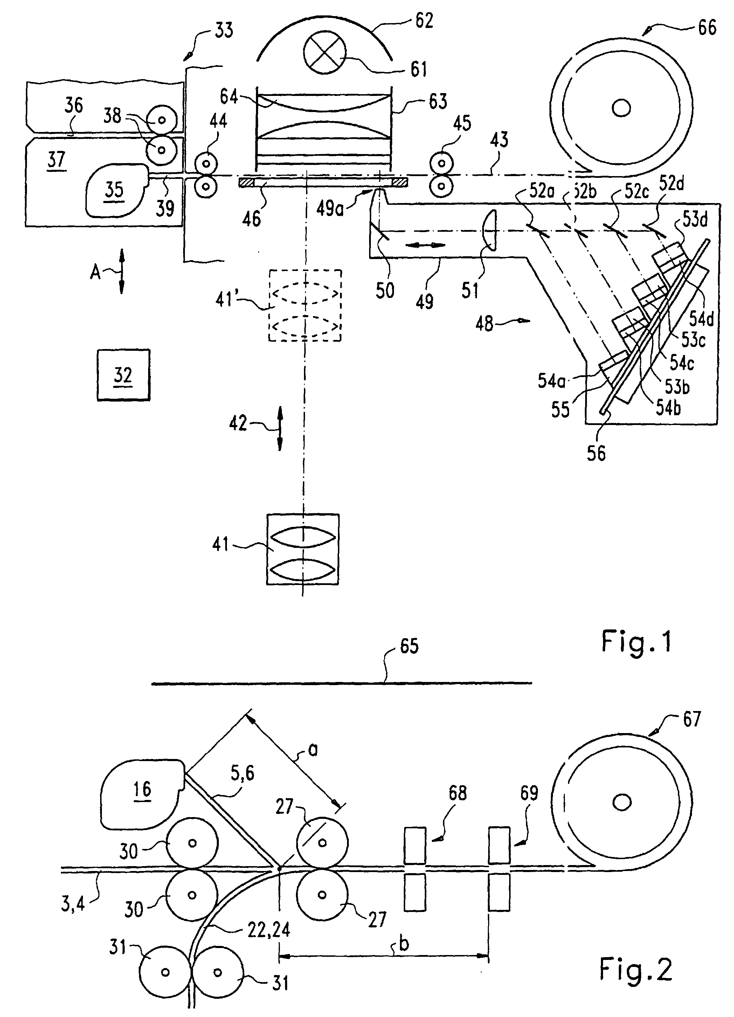

In Fig. 1 ist mit 41 ein Objektiv bezeichnet, das eine in der Filmebene 43 in einem Kopierfenster 46 liegende Kopiervorlage scharf auf das Kopiermaterialband 65 abbildet. Die Vorlage wird dabei mit einer in Richtung der optischen Achse des Objektivs 41 über der Filmebene 43 angebrachten Kopierlichtquelle 61 durchleuchtet, deren Licht durch einen Reflektor 62 durch in einem Lichtschacht 63 angeordnete Kondensorlinsen 64 auf eine übliche Streuscheibe geworfen wird, die ihrerseits die Vorlage im Fenster 46 ausleuchtet.

Das Objektiv 41 ist längs der optischen Achse in Richtung des Pfeiles 42 nach oben und unten verfahrbar. Die mit 41' bezeichnete, gestrichelte Stellung des Objektivs zeigt dabei die Position des Objektivs 41 mit dem geringsten Abstand zur Filmebene 43, d. h. die Position, in der die Vorlage mit dem größten Abbildungsmaßstab auf das lichtempfindliche Material 65 abgebildet wird.

Das gezeigte Kopiergerät arbeitet nach demselben Prinzip wie das in der DE-OS 34 37 222 beschriebene, d. h. Filme mit mehreren Kopiervorlagen werden zunächst in Richtung des Pfeiles von links durch den Kopierbereich hindurch befördert, dann an einer Filmmeßeinrichtung 48 vorbei und in eine Aufspuleinrichtung 66 geführt, bis alle Einzelbilder des Films die Filmmeßeinrichtung 48 passiert haben. Danach erfolgt während einer schrittweisen, entgegengesetzten Bewegung der Kopiervorgang, wobei die während des Abtastvorgangs gewonnenen Meßwerte zur Positionierung der Vorlagen im Kopierfenster 46 und zur Steuerung der Kopierlichtmengen benutzt werden.

In Einspulrichtung vor dem Kopierfenster sind Transportrollen 44 angeordnet, die den Anfang eines Films erfassen, diesen auf Filmführungskanten nach rechts schieben bis zum Erfassen durch ein zweites Transportrollenpaar 45, das dann den Film in bekannter Weise in die Aufspuleinrichtung 66 weiter fördert. An dem in der Fig. 1 rechten Seitenrand des Kopierfensters 46 ist ein Lichteintrittsspalt 49a einer Filmmeßeinrichtung 48 angeordnet, die wie folgt aufgebaut ist:

Unterhalb des Eintrittsspaltes 49a befindet sich unter 45° zur Filmebene 43 geneigt ein Umlenkspiegel 50, der durch die Kopiervorlage in den Spalt 49a eindringendes Licht in die Horizontale oder in eine parallele Ebene zur Filmebene umlenkt in ein Objektiv 51 hinein, welches über Strahlenteilerspiegel 52a, 52b, 52c und 52d eventuell bereits dichroitisch nach Farben getrennt das Licht unter wiederum 45° nach unten auf Meßzellenzeilen 54a, 54b, 54c und 54d wirft. Objektiv und Position der Meßzellenzeilen sind dabei so gewählt, daß der Filmstreifen oberhalb des Spalts 49a gerade scharf auf der Oberfläche der Meßzellenzeilen abgebildet wird. Vor den Meßzellenzeilen sind dabei Farbfilter 53b, 53c und 53d angeordnet, die jeweils eine der Meßzellenzeilen für eine der drei Grundfarben rot, grün oder blau empfindlich machen. Die erste Meßzellenzeile bleibt ungefärbt und liefert einen Grauwert, der sowohl für die Abtastung der Bildstege als auch für die Dichtebemessung benutzt werden kann. Die Meßzellenzeilen 54a - 54d sind dabei auf einem stufenförmig ausgebildeten Träger 55 so angeordnet, daß ihre Oberfläche gerade senkrecht zum einfallenden Licht steht. In dem Träger mit direkter Verbindung ist eine Platte 56, die die erforderlichen Leitungen in geätzter Form in einer Kupferfolie enthält, um die Meßwerte der einzelnen Abschnitte der Meßzellenzeilen einer Auswertelogik - insbesondere einem Mikroprozessor - zuzuführen, die jedoch in der Zeichnung nicht dargestellt ist.

Die Meßzellenzeilen 54 mit ihrem Träger, das Objektiv 51 und die Spiegel 50, 52 sind in einem Gehäuse 49 enthalten, das den gesamten Aufbau lichtdicht umschließt.

In Einzugsrichtung vor den Transportrollen 44 ist eine Überführstation 33 angeordnet. Eine Eingabestation für Patronen 35 und eine Eingabestation für Filmstreifen 36 befinden sich in einem Schlitten 37. Weiterhin sind in dem Schlitten noch Antriebswalzen 38 und nicht dargestellte Antriebe für die Filmspule und den Patronenverschluß vorgesehen. Der Schlitten ist in Richtung des Doppelpfeils A verfahrbar. Befindet sich der Schlitten 37 in der in Fig. 1 gezeigten Stellung, so kann ein in der Patroneneingabestation 35 befindlicher Film aus einer Patrone ausgespult und über die Filmführung 39 den Antriebswalzen 44 zugeführt werden.

Soll dagegen ein Kleinbildfilm über die Filmstreifeneingabestation 36 eingegeben werden, so wird der Schlitten so verfahren, daß die Filmstreifeneingabe 36 mit der Zuführung zu den Transportrollen 44 fluchtet. Während ein Film aus der Patroneneingabestation 35 kopiert wird, kann bereits ein Kleinbildfilm in die Filmstreifeneingabestation 36 eingegeben werden. Der Filmanfang wird solange durch die Rollen 38 fixiert, bis der gerade bearbeitete Film nach erfolgter Bearbeitung wieder durch die Führung 39 in die Patrone in der Patroneneingabestation 35 zurückgespult ist. Dann verfährt der Schlitten 37 und die Rollen 38 können den Kleinbildfilm an die Antriebsrollen 44 überführen. Die Koordination dieser Vorgänge übernimmt die Steuerung 32, die in hier nicht näher gezeigter Weise mit den Antrieben der Überführstation 33, den Transportrollen 44, 45 und selbstverständlich auch mit dem Antrieb des Objektivs 41, einer Auswertelogik für die Filmmeßeinrichtung 48 und einer Belichtungssteuerung verbunden ist.

Die Wirkungsweise der beschriebenen Vorrichtung ist wie folgt:

Stehen für das Kopieren Filmsteifen an, so wird die Filmmeßeinrichtung 48 in die dargestellte Position gebracht, in der der Lichteintrittsspalt 49a die Position am rechten Rand des Bildfensters 46 einnimmt. Diese Position ist abhängig von der Größe des Filmformates. Über die Steuerung 32 wird der Schlitten 37 in eine Stellung verfahren, in der der durch Rollen 38 definierte Spalt mit der Zuführung zu den Transportrollen 44 fluchtet. Der zwischen den Rollen 38 anstehende Filmstreifen kann nun zu den Transportrollen 44 befördert und von diesen bis zum Einlauf in das Rollenpaar 45 vorgeschoben werden. Damit beginnt der Abtastvorgang des durch die Lichtquelle 61 ausgeleuchteten Bereiches des Films über dem Eintrittsspalt 49a. Die Meßwerte für die einzelnen Bereiche in den drei Farben bzw. in der neutralen Dichte in Längsrichtung des Spaltes 49a quer zur Transportrichtung werden der Auswertelogik zugeführt, die sie etwa nach der Lehre der DE-PS 28 40 287 auswertet. Dies erfolgt für jede Zeile der Vorlage getrennt, jedoch zeitlich nacheinander, so daß nicht nur alle Meßwerte einer Vorlage erfaßt werden, sondern die Meßwerte aller Vorlagen in diesem Filmstreifen, bis das Filmende die Transportrollen 45 erreicht hat. Dann wird die Drehrichtung der Transportrollen 45, 44 umgedreht, und der Kopiervorgang erfolgt im Filmrücklauf Vorlage für Vorlage mit den aus den Meßwerten ermittelten Kopierlichtmengen in den einzelnen Farben. Der Kopiervorgang ist dann beendet, wenn das zunächst vorlaufende, nunmehr nachlaufende Ende des Filmstreifens die Transportrollen 38 wieder durchlaufen hat.

Die Position des Eintrittsspalts 49a muß nicht immer am Rand der Vorlage angeordnet sein. Falls es z. B. Fragen der Ausleuchtung dieses Bereiches geraten erscheinen lassen, kann die Filmmeßeinrichtung für das Abtasten von Filmen auch in eine Stellung gebracht werden, in der der Spalt 49a in Deckung mit der optischen Achse ist. Die Filmmeßeinrichtung ist dann allerdings vor dem Kopiervorgang in eine Randstellung zurück zu bewegen.

Von der Abtaststellung des Eintrittsspalts 49a hängt auch der Abstand zwischen der Bearbeitungsstation und dem Patronenmaul ab. Da der Eintrittsspalt 49a zu der Bearbeitungseinheit gehört, die am weitesten von der Patrone entfernt ist, kann der Abstand zwischen Patronenmaul und Bildfenster 46 um so größer werden, je weiter die Abtastposition im Bildfenster nach links rückt.

Soll nun ein Film in einer Patrone kopiert werden, so wird diese in die Patroneneingabestation 35 eingelegt. Da der in der Patrone enthaltene Film ein anderes Format als der vorher bearbeitete Kleinbildfilmstreifen aufweist, muß auch das Format des Fensters 46 geändert werden. Dies geschieht am besten durch ein Auswechseln der ganzen Maskenplatte. Wenn die neue Maskenplatte detektiert wird, verschiebt die Steuerung 32 das Objektiv 41 und stellt es auf den geänderten Abbildungsmaßstab ein. Ebenso wird die Filmmeßeinrichtung 48 so verfahren, daß sich der Spalt 49a wieder am Rand des Fensters 46 befindet. Nun werden die Antriebe zum Öffnen der Patrone und zum Drehen der Spule aktiviert, und der Filmanfang wird durch das Patronenmaul bis zu den Transportrollen 44 geschoben. Der folgende Abtastvorgang verläuft genauso wie oben für Filmstreifen beschrieben, bei einer Deaktivierung des Antriebs für die Patronenspule. Während des Kopiervorgangs im Filmrücklauf wird die Spule mit einem konstanten Drehmoment beaufschlagt, welches groß genug ist, um den Film in die Patrone zurückzuspulen. Die Geschwindigkeitssteuerung des Filmstreifens in der Kopierstation erfolgt wie bei einem Filmstreifen durch die Transportrollen 44, 45. Der Kopiervorgang ist beendet, wenn der Film vollkommen in die Patrone zurückgespult und diese wieder geschlossen worden ist.

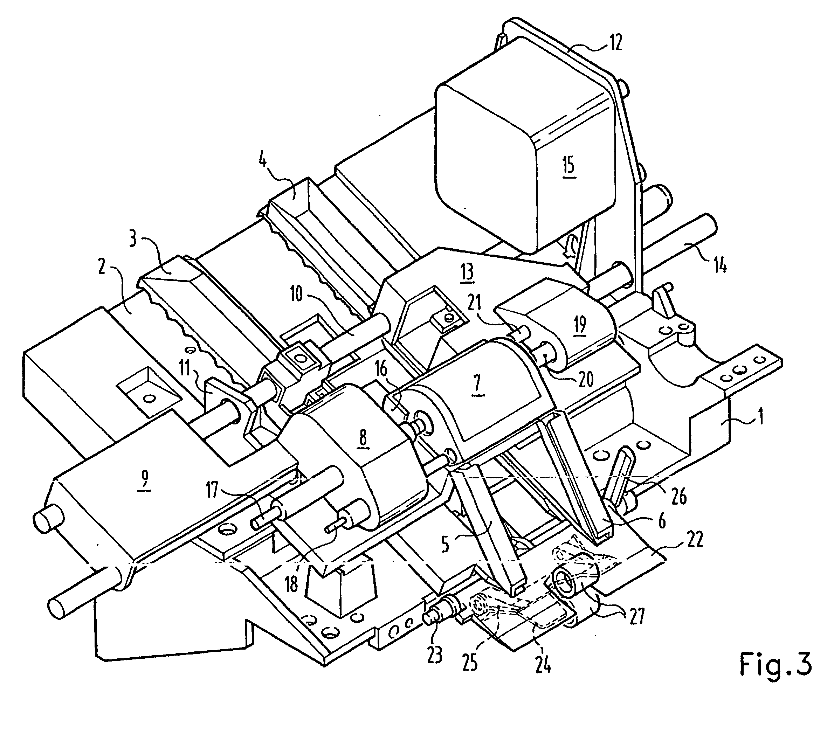

Fig. 2 zeigt eine Scan-Anordnung für ein digitales Minilab. Die Überführstation dieser Anordnung ist in Fig. 3 detailliert dargestellt und soll zum besseren Verständnis zuerst erläutert werden.

Sämtliche Teile der Überführstation nach Fig. 3 sind auf einer gemeinsamen Grundplatte 1 montiert. Die Grundplatte weist eine Nut 2 auf, in der die Randführungen 3 und 4 für die Filmstreifen verstellbar gelagert sind. Fest mit diesen Randführungen sind die Seitenführungen 5, 6 für den Film in der Patrone 7 verbunden.

Der Antriebsblock 8 für die Patrone 7 ist über das Verbindungsteil 9 und die Betätigungsstange 10 mit den Führungen 3 und 5 verbunden. Die Betätigungsstange 10 ist in dem gehäusefesten Lagerteil 11 und 12 axial beweglich geführt. Während die Betätigungsstange 10 mit dem Verbindungsteil 9 und der Randführung 3 fest verbunden ist, ist das Verbindungsteil 13 axial auf ihr verschieblich.

Die Betätigungsstange 14 dagegen, die auch in den Lagerteilen 11 und 12 axial verschieblich geführt ist, ist über das Verbindungsteil 13 fest mit den Führungen 4 und 6 verbunden, während das Verbindungsteil 9 axial verschieblich auf ihr gelagert ist. Die Betätigungsstangen 10 und 14 sind durch den Motor 15 und einen nicht näher dargestellten Spindeltrieb jeweils entgegengesetzt verschiebbar. Die Führungen für den Film sind auf diese Weise symmetrisch verstellbar.

Die Patrone 7 liegt in der Patronenaufnahme 16, die genau der äußeren Form der Patrone angepaßt ist. Der Antriebsblock 8 weist eine Welle 17 zum Antreiben der Filmspule in der Patrone und eine Welle 18 zum Öffnen des Patronenverschlusses auf. Ein Antrieb für diese Wellen ist in der Zeichnung nicht dargestellt. Auf dem Verbindungsteil 13 ist ein Stützteil 19 befestigt, welches sich zusammen mit diesem bewegt. Dieses Stützteil enthält einen Stützstift 20, der während der Filmeingabe die Filmspule abstützt und einen Taster 21, der erkennt, ob es sich bei dem Film in der Patrone um einen bereits entwickelten oder um einen noch nicht entwickelten Film handelt.

Unterhalb der Führungen 3, 4 und 5, 6 ist eine Klappe 22 über die Achse 23 schwenkbar befestigt. Unterhalb der Klappe ist ein Leitstück 24 angebracht, welches über eine Achse parallel zur Achse 23 schwenkbar ist. Das Leitstück 24 ist federnd an die Klappe 22 angedrückt, so daß die Kufen 25 an der Klappe 22 anliegen. Die Klappe 22 kann durch einen hier nicht dargestellten Mechanismus über den Betätigungshebel 26 verschwenkt werden. Das Antriebsrollenpaar 27 wird von allen eingegebenen Filmen gemeinsam benutzt.

Das Prinzip dieser Vorrichtung ist in Fig. 2 nochmals schematisch dargestellt. Die verschiedenen Stellungen der Vorrichtung, die durch den Motor 15 eingestellt werden, können beispielsweise an das Einsetzen unterschiedlicher, dem jeweiligen Format angepaßter Maskenplatten in die Bearbeitungsstation gebunden sein. In der in Fig. 3 gezeigten Stellung wäre daher eine Maskenplatte eingesetzt, die an das Format des in der Patrone 7 befindlichen Films angepaßt ist. Das Einlegen der Patrone wird über hier nicht dargestellte Lichtschranken erkannt, worauf der Motor 15 in Betrieb gesetzt wird und der Antriebsblock 8 und das Stützteil 19 so weit verfahren werden, daß die Welle 17 mit der Spule der Patrone gekoppelt ist. Gleichzeitig mit dem Stützteil 19 und dem Antriebsblock 8 werden die Führungen 5 und 6 auf den benötigten Abstand gefahren. Anhand der erreichten Stellung kann nochmals überprüft werden, ob die Patrone 7 richtig in die Patronenaufnahme 16 eingelegt wurde. Ist dies der Fall, so wird über den Taster 21 sichergestellt, daß der Film in der Patrone tatsächlich bereits entwickelt und damit nicht mehr lichtempfindlich ist. Danach wird über die Welle 18 der Verschluß der Patrone geöffnet und die Welle 17 angetrieben, so daß der Filmanfang aus der Patrone 7 heraus durch die Führungen 5 und 6 bis zu den Antriebsrollen 27 geschoben wird. Von hier aus kann der Film nun durch die Bearbeitungsstation gefördert und nach der Bearbeitung wieder in die Patrone zurückgespult werden. Daraufhin wird der Verschluß durch die Welle 18 wieder geschlossen, und der Motor 15 verfährt den Antriebsblock 8, das Stützteil 19 und die Führungen 5 und 6 wieder in die in Fig. 3 gezeigte Stellung.

Soll nun beispielsweise ein handelsüblicher Kleinbildfilm (oder aber ein Filmstreifen mit dem Format A110) bearbeitet werden, wird die entsprechende Maskenplatte in die Bearbeitungsstation eingesetzt. Daraufhin verfährt der Motor 15 die Randführungen 3, 4 so weit, bis sie den entsprechenden Abstand aufweisen. Um die Eingabesicherheit noch weiter zu erhöhen und auszuschließen, daß der Kleinbildfilm möglicherweise über die Führungen 5 und 6 eingegeben wird, könnte gleichzeitig ein hier nicht gezeigter Deckel über der Patronenaufnahme 16 geschlossen werden. Wird nun der Film ordnungsgemäß über die Randführungen 3, 4 eingegeben, so wird über einen DX-Code-Leser in den Randführungen 3 und 4 der jeweilige Randbereich des Filmstreifens abgetastet und festgestellt, auf welcher Seite sich der DX-Code befindet. Anhand der Lage des DX-Codes und der Leserichtung kann die Orientierung des Filmstreifens festgestellt werden. Wird eine falsche Eingabe festgestellt, so wird die Bedienperson aufgefordert, die Lage des Films zu korrigieren. Um den Film mit definierter Geschwindigkeit an den DX-Code-Lesern vorbeiführen zu können, wird der Filmanfang durch die Antriebswalzen 30 (Fig. 2) erfaßt. Diese Antriebswalzen führen den Film bei richtiger Eingabe dann auch den Antriebswalzen 27 zu.

Die in Fig. 3 gezeigte Überführstation weist eine dritte Eingabestation auf, die einen Film direkt aus einem Entwicklungsteil an die Bearbeitungsstation weiterleitet. Dieser Film wird von unten durch die Antriebswalzen 31 (Fig. 2) herangeführt. Hierzu werden die Klappe 22 und das daran anliegende Leitstück 24 über den Betätigungshebel 26 in eine Stellung angehoben, in der ein durch die Unterseite der Klappe 22 geführter Filmanfang den Antriebswalzen 27 zugeführt werden kann. Der Filmanfang schiebt sich zwischen die Kufen 25 des Leitstückes 24 und die Unterseite der Klappe 22. Dadurch bildet sich zwischen dem Leitstück 24 und der Klappe 22 ein Spalt, der breit genug ist, daß für den Film keine Verkratzungsgefahr besteht. Die Kufen 25 sind so angeordnet, daß sie den Film nur in seinem Randbereich berühren. Der Filmanfang wird wiederum durch die Walzen 27 erfaßt und in die Bearbeitungsstation transportiert. Sobald das Filmende den Spalt zwischen der Klappe 22 und dem Leitstück 24 verläßt, wird dieses über eine nicht dargestellte Feder wieder an die Klappe 22 angedrückt. Nach dem Bearbeitungsvorgang kann der Film nun in die entgegengesetzte Richtung in ein Ausgabefach unterhalb der gezeigten Vorrichtung geleitet werden. Da der Spalt zwischen der Klappe 22 und dem Leitstück 24 nun geschlossen ist, läuft das nun führende Filmende gegen die Unterseite des Leitstücks 24 und wird von dieser direkt in die Auffangkammer geführt. Selbstverständlich können auch manuell eingegebene Filmstreifen auf gleiche Weise in die Auffangkammer geführt werden.

Die Bearbeitungsstation besteht in dem Ausführungsbeispiel nach Fig. 2 aus einer Prescan- 68 und einer Mainscaneinrichtung 69. Sollen der Prescan- und der Mainscanvorgang in einem Durchlauf durchgeführt werden, sollten die beiden Scaneinheiten einen Abstand aufweisen, der mindestens der Länge eines Einzelbildes des größten zu verarbeitenden Formats entspricht.

Um auch hier das letzte Einzelbild eines Patronenfilms in der Mainscaneinrichtung 69 bearbeiten zu können, sollte die Strecke a zwischen dem Patronenmaul und der Weiche in der Überführstation in Verbindung mit der Strecke b zwischen der Weiche und dem linken Seitenrand des Abtastspaltes der Mainscaneinrichtung 69 nicht mehr als 119 mm betragen.

Die Scaneinheiten können mit einem Flächen- oder einem Zeilensensor ausgestattet sein. Wird der Zeilenscanner aus dem Ausführungsbeispiel nach Fig. 1 verwendet, sind beide Bearbeitungseinheiten in einem Gehäuse vereint. Weiterhin werden die gleiche Lichtquelle und die gleiche Optik benutzt. Hier kann die Meßzellenzeile 54a, die nur den Grauwert erfaßt, für den Prescanvorgang verwendet werden. Es besteht jedoch auch die Möglichkeit, die ganze Meßzellenanordung sowohl für den Prescan- als auch für den Mainscanvorgang zu verwenden. Da für den Prescanvorgang keine hohe Auflösung, aber eine große Dynamik der Sensorik notwendig ist, müssen mehrere Einzelpixel der Zeilen jeweils zusammengeschaltet werden, so daß sich das Signal dieses "Makropixels" deutlicher von dem Grundrauschen abhebt und dadurch differenzierter ausgewertet werden kann. Für den Mainscanvorgang wird dann die Meßeinrichtung mit Hilfe der Prescanwerte eingestellt und die volle Auflösung des Sensors verwendet.

Für diesen Fall, in dem gewissermaßen zwei Bearbeitungseinheiten in einem umschaltbaren Meßaufbau realisiert sind, müssen jedoch die Scanvorgänge auf zwei Filmdurchläufe aufgeteilt werden. Auch hier werden alle Filmarten wiederum in gleicher Weise behandelt, so daß Fehlbedienungen kaum noch vorkommen: Der Filmstreifen oder die Patrone wird in die dafür vorgesehene Eingabestation eingelegt; beim ersten Durchlauf in den Zwischenspeicher 67 wird der Prescanvorgang durchgeführt; beim Rücklauf wird der Mainscanvorgang durchgeführt; der Filmstreifen oder die Patrone wird nach der Bearbeitung da entnommen, wo die Eingabe erfolgte. Lediglich ein Filmstreifen, der aus einer Filmstreifenentwicklung übernommen wurde, wird entweder über die Filmstreifeneingabe oder über ein Ausgabefach ausgegeben.

## Patentansprüche

1. Vorrichtung zum Bearbeiten von fotografischen Filmen mit wenigstens einer Eingabestation für Filmstreifen (36 bzw. 3, 4) und einer Eingabestation für Filmpatronen (35 bzw. 16), wobei jede Eingabestation eine eigene Führungsund/oder Transporteinrichtung (38; 39 bzw. 5, 6, 8, 17; 3, 4, 30) aufweist, mit einer gemeinsamen Bearbeitungsstation (44 - 66 bzw. 68, 69) und mit einer Führungs- und Transporteinrichtung (43 - 46, 66 bzw. 27, 67) durch die gemeinsame Bearbeitungsstation, wobei eine Überführstation (33) vorgesehen ist, die die Filme von den Führungs- und/oder Transporteinrichtungen der Eingabestationen in die Führungs- und Transporteinrichtung durch die gemeinsame Bearbeitungsstation überführt, wobei ferner die gemeinsame Bearbeitungsstation zwei Bearbeitungseinheiten (41, 65; 48 bzw. 68, 69) aufweist, und wobei die Filmpatrone zwischen der Bearbeitung in der ersten Bearbeitungseinheit und der Bearbeitung in der zweiten Bearbeitungseinheit nicht umgesetzt werden muss.

2. Vorrichtung nach Anspruch 1, **dadurch gekennzeichnet, dass** die größte Wegstrecke zwischen dem Filmaustritt einer in der Eingabestation für Filmpatronen (35 bzw. 16) befindlichen Filmpatrone und dem dieser Eingabestation zugewandten Seitenrand einer Bearbeitungseinheit kleiner als 119 mm ist.

3. Vorrichtung nach Anspruch 1, **dadurch gekennzeichnet, dass** die erste Bearbeitungseinheit eine Prescan- (68) und die zweite Bearbeitungseinheit eine Mainscaneinrichtung (69) aufweist.

4. Vorrichtung nach Anspruch 1, **dadurch gekennzeichnet, dass** die erste Bearbeitungseinheit eine Filmmeßeinrichtung (48) und die zweite Bearbeitungseinheit eine Kopiereinrichtung (41, 65) aufweist.

5. Vorrichtung nach Anspruch 1, **dadurch gekennzeichnet, dass** eine Steuerung (32) vorgesehen ist, die die Führungs- und/oder Transporteinrichtungen (38; 39 bzw. 5, 6, 8, 17; 3, 4, 30) der Eingabestationen, die Führungs- und Transport-einrichtung (43 - 46, 66 bzw. 27, 67) der gemeinsamen Bearbeitungs-station (44 - 66 bzw. 68, 69) und die beiden Bearbeitungseinheiten (41, 65; 48 bzw. 68, 69) so ansteuert, dass die Filme in einem Durchlauf in der einen Bearbeitungseinheit und in einem weiteren Durchlauf in der anderen Bearbeitungseinheit bearbeitet werden.

6. Vorrichtung nach Anspruch 5, **dadurch gekennzeichnet, dass** die Filme in einem Durchlauf in der einen Bearbeitungseinheit (48 bzw. 68) und im Rücklauf in der anderen Bearbeitungseinheit (41, 65 bzw. 69) bearbeitet werden.

7. Vorrichtung nach Anspruch 1, **dadurch gekennzeichnet, dass** die Eingabestation für Patronen (35 bzw. 16) so ausgeformt ist, dass die Patrone in nur einer Orientierung eingegeben werden kann.

8. Vorrichtung nach Anspruch 1, **dadurch gekennzeichnet, dass** eine weitere Eingabestation (22, 24, 31) für Filmstreifen vorgesehen und so ausgebildet ist, dass Filmstreifen von einer Filmstreifenentwicklungseinrichtung übernommen werden können.

9. Vorrichtung nach Anspruch 1, **dadurch gekennzeichnet, dass** in der Führungs- und/oder Transporteinrichtung (38; 39 bzw. 5, 6, 8, 17 3, 4, 30) der Eingabestationen (35; 36 bzw. 3, 4, 16) Mittel zum Überprüfen der Orientierung der eingegebenen Filme oder Patronen vorgesehen sind.

10. Vorrichtung nach Anspruch 9, **dadurch gekennzeichnet, dass** bei falscher Eingabe eine Meldung generiert wird.

11. Vorrichtung nach Anspruch 1, **dadurch gekennzeichnet, dass** die Eingabestationen (35; 36) auf einem Schlitten (37) montiert sind, der so verfahrbar ist, dass jeweils eine der Führungs- und/oder Transporteinrichtungen (38; 39) der Eingabestationen mit der Führungs- und Transporteinrichtung (43-46, 66) durch die Bearbeitungsstation (44 - 66) in Verbindung steht.

12. Vorrichtung nach Anspruch 1, **dadurch gekennzeichnet, dass** die Eingabestationen (3, 4; 16) ortsfest sind und die Führungs- und/oder Transporteinrichtungen (5, 6, 8, 17; 3, 4, 30) der Eingabestationen in die Führungs- und Transporteinrichtung (27, 67) durch die Bearbeitungsstation (68, 69) einmünden.

13. Vorrichtung nach Anspruch 12, **dadurch gekennzeichnet, dass** an der Einmündung eine verstellbare Klappe (22) als Weiche für den Film vorgesehen ist.

14. Vorrichtung nach Anspruch 1, **dadurch gekennzeichnet, dass** die Führungs- und Transporteinrichtung (43 - 46, 66 bzw. 27, 67) durch die Bearbeitungs-station (44 - 66 bzw. 68, 69) verstellbar oder austauschbar ist.

15. Vorrichtung nach Anspruch 1, **dadurch gekennzeichnet, dass** wenigstens eine Eingabestation aus einem Magazin befüllbar ist.

16. Vorrichtung nach Anspruch 1, **dadurch gekennzeichnet, dass** die Eingabestationen für die Aufnahme eines Filmstreifens oder einer Patrone sperrbar sind.

## Claims

1. A device for processing photographic films, comprising at least one input station for filmstrips (36 or 3, 4) and an input station for film cartridges (35 or 16), each input station having its own guide and/or transport arrangement (38; 39 or 5, 6, 8, 17; 3, 4, 30), and further comprising a common processing station (44-66 or 68, 69) and a guide and transport arrangement (43-46, 66 or 27, 67) through the common processing station, **wherein** a transfer station (33) which transfers the films from the guide and/or transport arrangements of the input stations to the guide and transport arrangement through the common processing station is provided, **wherein** furthermore the common processing station includes two processing units (41, 65; 48 or 68, 69) and **wherein** the film cartridge does not need to be repositioned between processing in the first processing unit and processing in the second processing unit.

2. A device according to Claim 1, **characterised in that** the longest travel distance between the film outlet of a film cartridge located in the input station for film cartridges (35 or 16) and the lateral edge of a processing unit facing towards said input station is less than 119 mm.

3. A device according to Claim 1, **characterised in that** the first processing unit includes a prescanning arrangement (68) and the second processing unit includes a main scanning arrangement (69).

4. A device according to Claim 1, **characterised in that** the first processing unit includes a film measuring arrangement (48) and the second processing unit includes a printing arrangement (41, 65).

5. A device according to Claim 1, **characterised in that** a control unit (32) is provided which activates the guide and/or transport arrangements (38; 39 or 5, 6, 8, 17; 3, 4, 30) of the input stations, the guide and transport arrangement (43-46, 66 or 27, 67) of the common processing station (44-66 or 68, 69) and the two processing units (41, 65; 48 or 68, 69) in such a way that the films are processed in one pass in the one processing unit and in a further pass in the other processing unit.

6. A device according to Claim 5, **characterised in that** the films are processed in one pass in the one processing unit (48 or 68) and are processed on the return pass in the other processing unit (41, 65 or 69).

7. A device according to Claim 1, **characterised in that** the input station for cartridges (35 or 16) is so configured that the cartridge can be inserted in only one orientation.

8. A device according to Claim 1, **characterised in that** a further input station (22, 24, 31) for filmstrips is provided and is so configured that filmstrips can be taken over from a filmstrip developing arrangement.

9. A device according to Claim 1, **characterised in that** means for checking the orientation of the inserted films or cartridges are provided in the guide and/or transport arrangement (38; 39 or 5, 6, 8, 17; 3, 4, 30) of the input stations (35; 36 or 3, 4, 16).

10. A device according to Claim 9, **characterised in that** a warning is generated in case of incorrect insertion.

11. A device according to Claim 1, **characterised in that** the input stations (35; 36) are mounted on a carriage (37) which is displaceable in such a way that in each case one of the guide and/or transport arrangements (38; 39) of the input stations is connected to the guide and transport arrangement (43-46, 66) through the processing station (44-66).

12. A device according to Claim 1, **characterised in that** the input stations (3, 4; 16) are fixed and the guide and/or transport arrangements (5, 6, 8, 17; 3, 4, 30) of the input stations join the guide and transport arrangement (27, 67) through the processing station (68, 69).

13. A device according to Claim 12, **characterised in that** a displaceable flap (22) is provided at the junction as a deflector for the film.

14. A device according to Claim 1, **characterised in that** the guide and transport arrangement (43-46, 66 or 27, 67) through the processing station (44-66 or 68, 69) can be adjusted or exchanged.

15. A device according to Claim 1, **characterised in that** at least one input station can be filled from a magazine.

16. A device according to Claim 1, **characterised in that** the input stations for receiving a filmstrip or a cartridge can be blocked.

## Revendications

1. Dispositif destiné au traitement de films photographiques, avec au moins un poste d'insertion pour des pellicules de film (36 ou 3, 4) et un poste d'insertion pour des chargeurs de film (35 ou 16), chaque poste d'insertion comportant son propre dispositif de guidage et/ou de transport (38 ; 39 ou 5, 6, 8, 17 ; 3, 4, 30), avec un poste de traitement commun (44 à 66 ou 68, 69), et avec un dispositif de guidage et de transport (43 à 46, 66 ou 27, 67) passant à travers le poste de traitement commun, un poste de transfert (33) étant prévu qui transfère les films des dispositifs de guidage et/ou de transport des postes d'insertion dans le dispositif de guidage et de transport passant à travers le poste de traitement commun, le poste de traitement commun comportant en outre deux unités de traitement (41, 65 ; 48 ou 68, 69), et le chargeur de film n'ayant pas à être déplacé entre le traitement dans la première unité de traitement et le traitement dans la deuxième unité de traitement.

2. Dispositif selon la revendication 1, **caractérisé en ce que** le trajet le plus long, entre la sortie du film d'un chargeur de film se trouvant dans le poste d'insertion pour chargeurs de film (35 ou 16) et le bord latéral d'une unité de traitement orientée vers ce poste d'insertion, est inférieur à 119 mm.

3. Dispositif selon la revendication 1, **caractérisé en ce que** la première unité de traitement comporte un dispositif de prescanning (68), et la deuxième unité de traitement un dispositif de mainscanning (69).

4. Dispositif selon la revendication 1, **caractérisé en ce que** la première unité de traitement comporte un dispositif de mesure (48) de film, et la deuxième unité de traitement un dispositif de copie (41, 65).

5. Dispositif selon la revendication 1, **caractérisé en ce qu'**il est prévu une commande (32), qui commande les dispositifs de guidage et/ou de transport (38 ; 39 ou 5, 6, 8, 17 ; 3, 4, 30) des postes d'insertion, le dispositif de guidage et de transport (43 à 46, 66 ou 27, 67) du poste de traitement commun (44 à 66 ou 68, 69) et les deux unités de traitement (41, 65 ; 48 ou 68, 69), de telle sorte que les films soient traités lors d'un passage dans l'une des unités de traitement, et lors d'un autre passage dans l'autre unité de traitement.

6. Dispositif selon la revendication 5, **caractérisé en ce que** les films sont traités lors d'un passage dans l'une des unités de traitement (48 ou 68), et lors du passage de retour dans l'autre unité de traitement (41, 65 ou 69).

7. Dispositif selon la revendication 1, **caractérisé en ce que** le poste d'insertion pour chargeurs (35 ou 16) est agencé de telle sorte que les chargeurs ne peuvent être insérés que dans une seule orientation.

8. Dispositif selon la revendication 1, **caractérisé en ce qu'**il est prévu un autre poste d'insertion (22, 24, 31) pour des pellicules de film, qui est agencé de telle sorte que des pellicules de film d'un dispositif de développement de film puissent être réceptionnées.

9. Dispositif selon la revendication 1, **caractérisé en ce que** des moyens destinés à la vérification de l'orientation des films ou chargeurs introduits sont prévus dans le dispositif de guidage et/ou de transport (38 ; 39 ou 5, 6, 8, 17 ; 3, 4, 30) des postes d'insertion (35 ; 36 ou 3, 4, 16).

10. Dispositif selon la revendication 9, **caractérisé en ce qu'**un message est généré en cas d'introduction erronée.

11. Dispositif selon la revendication 1, **caractérisé en ce que** les postes d'insertion (35 ; 36) sont montés sur un chariot (37), qui peut être déplacé de telle sorte que l'un des dispositifs de guidage et/ou de transport respectifs (38 ; 39) des postes d'insertion soit en liaison avec le dispositif de guidage et de transport (43 à 46, 66) passant à travers le poste de traitement (44 à 66).

12. Dispositif selon la revendication 1, **caractérisé en ce que** les postes d'insertion (3, 4 ; 16) sont stationnaires, et **en ce que** les dispositifs de guidage et/ou de transport (5, 6, 8, 17 ; 3, 4, 30) des postes d'insertion débouchent dans le dispositif de guidage et de transport (27, 67) passant à travers le poste de traitement (68, 69).

13. Dispositif selon la revendication 12, **caractérisé en ce que**, au niveau du débouché, il est prévu un volet réglable (22) en tant qu'aiguille.

14. Dispositif selon la revendication 1, **caractérisé en ce que** le dispositif de guidage et de transport (43 à 46, 66 ou 27, 67) passant à travers le poste de traitement (44 à 66 ou 68, 69) est réglable ou interchangeable.

15. Dispositif selon la revendication 1, **caractérisé en ce qu'**un poste d'insertion au moins peut être rempli à partir d'un magasin.

16. Dispositif selon la revendication 1, **caractérisé en ce que** les postes d'insertion peuvent être bloqués pour la réception d'une pellicule de film ou d'un chargeur.
